Europäisches Patentamt

European Patent Office

Office européen des brevets

(19)

(11) Publication number: **0 136 126**
**B1**

(12) **EUROPEAN PATENT SPECIFICATION**

(45) Date of publication of patent specification: **14.06.89**

(51) Int. Cl.⁴: **B 03 C 1/28**, B 01 L 9/06 //
G01N33/53

(21) Application number: **84306122.7**

(22) Date of filing: **07.09.84**

(54) Magnetic separator for solid phase immunoassays.

(30) Priority: **09.09.83 US 531158**

(43) Date of publication of application:
**03.04.85 Bulletin 85/14**

(45) Publication of the grant of the patent:
**14.06.89 Bulletin 89/24**

(84) Designated Contracting States:
**DE FR GB IT**

(56) References cited:
EP-A-0 030 086
DE-A-3 102 029
US-A-3 970 518

(73) Proprietor: **Corning Glass Works**
**Houghton Park**
**Corning New York 14831 (US)**

(72) Inventor: **Adams, Trevor H.**
**79 Seekonk Street**
**Norfolk Massachusetts 02056 (US)**
Inventor: **Grady, Donald R.**
**47 Fairway Lane**
**Foxboro Massachusetts 02035 (US)**
Inventor: **Harkins, Jack R.**
**30 Cameron Drive**
**Hollis New Hampshire 03049 (US)**
Inventor: **Josephson, Lee**
**767 B. Concord Avenue**
**Cambridge Massachusetts 02138 (US)**
Inventor: **Rahn, Henry J.**
**23 Maple Avenue**
**Sharon Massachusetts 02067 (US)**

(74) Representative: **Boon, Graham Anthony et al**
**Elkington and Fife Beacon House 113 Kingsway**
**London, WC2B 6PP (GB)**

Courier Press, Leamington Spa, England.

## Description

This invention relates to solid phase immunoassays employing magnetically responsive particles and in particular to a magnetic separator for use in conducting such assays.

The expression "immunoassay", as used herein, refers to a method for determining the presence or concentration of a substance in a fluid, which method is based on the use of antibodies specific to that substance. For convenience, this term is also used to describe assay techniques using binding proteins and similar materials, which specifically bind to analytes, but which are not technically biological antibodies.

Since it is known that antibodies to a given substance are extremely specific to that substance, research efforts have been directed in recent years to use that specificity in determining the presence or concentration of substances which are present in very small quantities in fluids, especially human body fluids such as blood. Although there now exists a wide variety of immunoassay techniques, the more common assays require the use of a label for either the antibody or the antigenic substance or hapten being determined. The use of a label permits a relatively rapid detection or quantification in conventional laboratories using conventional equipment. A variety of labels is known and used in immunoassays. For example, fluorogenic materials useful in a fluoroimmunoassay (FIA) are described in U.S. Pat. No. 3,940,475 to Gross. Enzyme markers can be coupled to antibodies or antigens to perform an enzyme immunoassay (EIA) as illustrated in U.S. Pat. No. 3,654,090 to Schuurs et al. Radioisotopes can be incorporated into an antibody or substance to perform a radioimmunoassay (RIA) as illustrated in U.S. Pat. No. 3,555,143 to Axen et al.

A typical immunoassay requires, at some point, an immunochemical complexation between an antigenic substance and its respective antibody. Commonly, one of the species in such a complexation is labelled, and, by competing with, complexing with, or displacing an unknown substance in such complexation, and then quantitating the label (e.g., fluorometrically, enzymatically, radiometrically, etc.), it is possible to determine the unknown by known means. Prior to such quantitation, however, it is generally necessary to separate the immunochemically complexed products from the surrounding incubation medium. Such separations can be facilitated by providing one of the species involved in an immobilized, insoluble form. For example, it is known that antigenic substances, haptens or antibodies thereto can be attached to, or incorporated in, various water-insoluble carrier materials. See, for example, U.S. Pat. Nos. 3,555,143 (organic carries) and 3,652,761 (inorganic carriers). When either of the reactants in an immunoassay is used in such an immobilized form, there is present a solid phase which, when appropriate, can be readily separated (e.g., by centrifugation or filtration) for label quantitation. The use of composites comprising antibodies or antigens associated with or immobilized on essentially water-insoluble carrier materials is commonly referred to as a solid-phase immunoassay (SPIA).

Solid phase carrier materials are normally used in finely-divided particulate form for two main reasons. Firstly, in order to make assays quantitative, several known concentrations of the species being assayed are measured, along with the samples to be assayed, forming a batch of test samples. By carefully ensuring that all test samples are treated identically, the known concentrations provide a standard or calibration curve for that particular batch. By attaching the reagent to finely-divided particles, which are dispersed in liquid in a gently stirred receptacle, each predetermined volume drawn from the receptacle contains the same quantity of reagent. Secondly, most assays involve an incubation period during which the immobilized reagents react with other reagents in solution. It is desirable that the immobilized reagent remains dispersed in suspension without serious sedimentation so that dissolved reagents do not have to diffuse very far to reach immobilized material.

As noted hereinbefore, centrifugation is routinely used to separate the solid phase from the reaction fluid. The fluid is manually or mechanically decanted. Depending upon the centrifuge available, number of samples being assayed, and so on, separation can take up to 10 minutes or more.

Magnetic separation has been considered in the art to avoid the need for centrifugation. In this type of procedure, the water-insoluble solid carrier is a particle which will respond to a magnetic field (hereinafter referred to as a "magnetically responsive particle" or a "magnetic particle"). Then, separation can be carried out in a magnetic field, for example, by "holding" the magnetic particles while the reaction fluid is removed therefrom.

Examples of patent and literature references relating to such magnetic separations include U.S. Pat. No. 3,933,997 to Hersh et al., which discloses the use of a strong magnet to pull iron oxide particles coated with anti-digoxin antibodies to the bottom of a reaction test tube, and U.S. Pat. No. 4,297,337 to Mansfield et al., which discloses the use of a magnetic separator to pull magnetic glass particles onto the side walls of a test vessel during solid phase immunoassays. Guesdon et al, Immunochemistry 14:443 (1977) describes a similar magnetic separator. U.S. Patent 4,219,411 to Yen et al. describes various magnetic separators for biological cells coupled to magnetic beads by antigen-antibody coupling, including a horseshoe magnet separator. Other magnetic separators are disclosed in U.S. Patent No. 3,985,649 to Eddelman, U.S. Patent No. 4,141,687 to Forrest et al., U.S. Patent No. 4,272,510 to Smith et al., and U.S. Patent Nos. 3,970,518, 4,018,886 and 4,115,535 to Giaever.

A commercial solid phase immunoassay system employing magnetically responsive particles is presently available from Serono Laboratories, Inc., Braintree, MA. The system employs a rack for holding up to 60 test tubes in 6 rows, each row holding 10 tubes. The rack consists of a stainless steel frame including a top and two sides, the top having 60 holes formed therein, each hole having a plastic insert connected thereto for holding a test tube. To perform the magnetic separation, the rack is slid, in a horizontal plane, into a base consisting of a bottom and two upstanding sides. The upstanding sides include inwardly directed flanges at their tops which engage the top of the rack and hold the rack and the base together. In the completed construction, the sides of the rack are inward of the sides of the base. The base also includes an array of disc magnets, one magnet for each of the 60 test tubes, the magnets being arranged with their axes perpendicular to the bottom of the base. When the rack and the base are combined, the bottom of each of the test tubes lies over one of the magnets.

In practice, this commercial rack has been found to have a number of disadvantages. First, the commercial product uses relatively large magnetically responsive particles, e.g., particles having average diameters in the micron, rather than the submicron, range. Small particles are in fact preferred because they do not exhibit rapid gravitational settling when dispersed in an aqueous medium and because they have a greater surface area per weight so that more antibody or the like can be coupled to them. Small particles, however, are less responsive to a magnetic field, the net force acting on a particle in a magnetic field being proportional to the volume of the particle. This reduction in responsiveness, coupled with the reduced rate of gravitational settling of small particles, results in relatively long separation times for those particles in the weak portions of the magnetic field, i.e., those particles far away from the magnet located at the bottom of the container. As demonstrated in the comparative example presented below, the arrangement of the magnets in accordance with the present invention results in faster separation times than the arrangement used in the commercial rack and thus helps overcome the problem of long separation times caused by small particles.

Second, the commercial system uses relatively small reagent volumes, e.g., on the order of 0.25 milliliters. Large reagent volumes are in fact preferred because they are easier to measure accurately and because the transfer of larger volumes involves the use of larger pipets, cannulas and the like which are more easily handled by laboratory personnel. In comparison with the prior art system, the present invention achieves separations in commercially acceptable periods of time on volumes in excess of 1.5 milliliters using partices having average diameters in the submicron range.

Third, the rack and the base of the presently available commercial product are difficult to unite, in that, the rack must be precisely vertically and horizontally aligned with the base so that it will slide between the base's sides and under the flanges at the tops of those sides. Also, horizontal, as well as vertical, canting of the rack with respect to the base must be avoided during assembly so as to be able to fully slide the rack into the base.

Fourth, because the magnets are arranged with their axes perpendicular to the bottom of the base, the presently used separator is capable of producing significant stray magnetic fields. In particular, the separator can produce a strong magnet field in the space below the base. This field can cause the base to become magnetically affixed to, for example, a metal counter top or filing cabinet and can also cause the base to collect small, stray metallic objects when being moved from place to place. Moreover, such a field can damage sensitive electronic equipment and other apparatus, as well as resulting in the inadvertent erasure of information stored in magnetic form, e.g., on magnetic tapes or floppy disks. Such forms of information storage are already commonly found in clinical laboratories, where magnetic separators are used, and can be expected to become more common in the years to come. To reduce these stray fields to within manageable limits, the prior art separator currently employs a magnetic shield between the bottoms of the magnets and the bottom of the base. Such a separator obviously increases the weight, cost and complexity of the prior art device.

In addition to the foregoing disadvantages, the prior art magnetic separator tends to corrode and collect dirt at the junction of the plastic inserts for holding the test tubes and the top of the rack. Also, the prior art rack cannot be immersed in boiling water for an extended period of time, as is required for certain immunoassays, e.g., vitamin $B_{12}$/folate analyses. Further, the rack for the test tubes is symmetric from front to back and side to side making it possible to confuse the front row of test tubes with the back row if the rack is accidently rotated by 180° during one of the manipulative steps of the analysis. Moreover, unless the front and back rows of the rack contain some test tubes, which is not the way laboratory personnel typically fill such racks when less than all the rows are being used (they normally fill the front rows first), the rack is not self-supporting when inverted during the decanting step of the immunoassay.

DE—A—3102029 discloses another type of magnetic separator for performing magnetic separations in a plurality of containers. Such an apparatus comprises a rack for receiving and holding the containers at predetermined locations, said rack including a top having an array of apertures therein, each aperture sized to receive one container, and a base which mates with the rack, said base including a bottom having associated therewith an array of magnets. Each container has one side thereof in proximity to a pole of a respective magnetic, but the other side is not in proximity to the pole of any magnet.

According to the invention there is provided apparatus for simultaneously performing magnetic separations in a plurality of containers, each container containing, in use, an aqueous dispersion of particles which will respond to a magnetic field, comprising:

a rack for receiving and holding the containers at predetermined locations, said rack including a top having an array of apertures therein, each aperture sized to receive one container; and

a base which mates with the rack, said base including a bottom having associated therewith an array of magnets, characterized in that the magnets are arranged with their axes parallel to the bottom of the base to minimize stray magnetic fields in the space below the apparatus, and the rack and the base mating with each other to bring a first portion of each container into the proximity of a north pole of a magnet and a second portion of each container into the proximity of a south pole of a magnet.

As used herein the term "disc magnet" includes all types of magnets which generally have a depth shorter than their width or height, and is not limited to magnets having a circular cross section.

The foregoing and other aspects of the invention will be apparent from the description of the preferred embodiments presented below and the claims appended hereto, as well as from the accompanying drawings, which are incorporated in and constitute part of the specification.

In the accompanying drawings:

Figure 1 is a perspective view of a magnetic separator constructed in accordance with a preferred embodiment of the present invention.

Figure 2 is an exploded, perspective view of the magnetic separator shown in Figure 1.

Figure 3 is a top view of the magnetic separator shown in Figure 1.

Figure 4 is a front view of the magnetic separator shown in Figure 1.

Figure 5 is a side view of the magnetic separator shown in Figure 1.

Figure 6 is an enlarged, sectional view taken along lines 6—6 of Figure 4 showing certain features of the legs of the rack portion of the magnetic separator of Figure 1.

Figure 7 is an enlarged, sectional view taken along lines 7—7 of Figure 4 showing the arrangement of the magnets in the base portion of the magnetic separator of Figure 1.

Figure 8 is an enlarged, sectional view taken along lines 8—8 of Figure 3 showing, among other things, the mating of the handles of the rack and base portions of the magnetic separator of Figure 1 to form a combined handle for moving the separator as a unit.

Figure 9 is a bottom, perspective view, partially in section, of the rack portion of the magnetic separator of Figure 1.

Figure 10 shows the relative rates of separation achieved using the magnet configuration of the present invention (triangle data points) as compared to the magnet configuration employed in the presently available commercial separator (square data points).

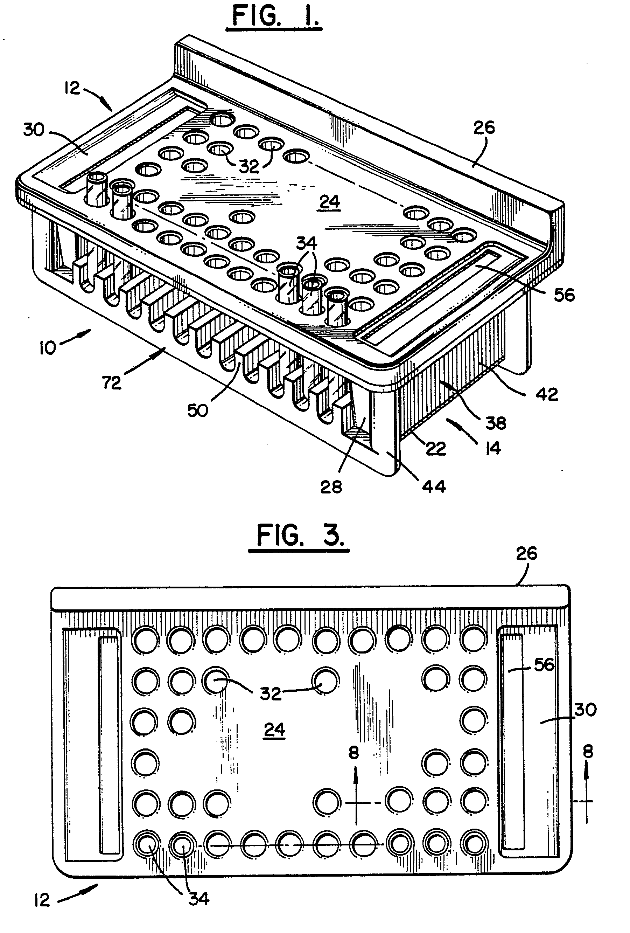

Referring now to the drawings, wherein like reference characters designate like or corresponding parts throughout the several views, there is shown in Figure 1 a magnetic separator 10 which includes an upper rack portion 12 and a lower base portion 14.

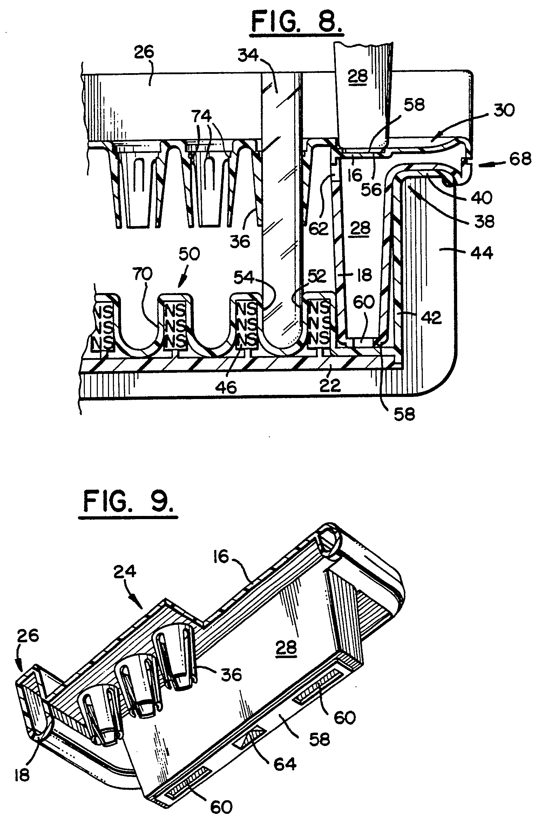

Base portion 14 includes bottom 72 having associated therewith an array of magnets 46 (see Figures 7 and 8). Rack portion 12 includes top 24 having an array of apertures 32 therein, each aperture being sized to receive one container 34. For convenience of reference, the apertures can be numbered, e.g., from 1 to 60 beginning with the left hand, frontmost aperture. Containers 34 are typically open ended, 12×75 mm test tubes made of, for example, glass or polypropylene.

Rack 12 mates with base 14 through movement of the rack in a generally vertical direction to bring a first portion 52 of each container 34 into the proximity of a north pole of one of magnets 46 and to bring a second portion 54 of each container 34 into the proximity of south pole of one of magnets 46 (see Figure 8).

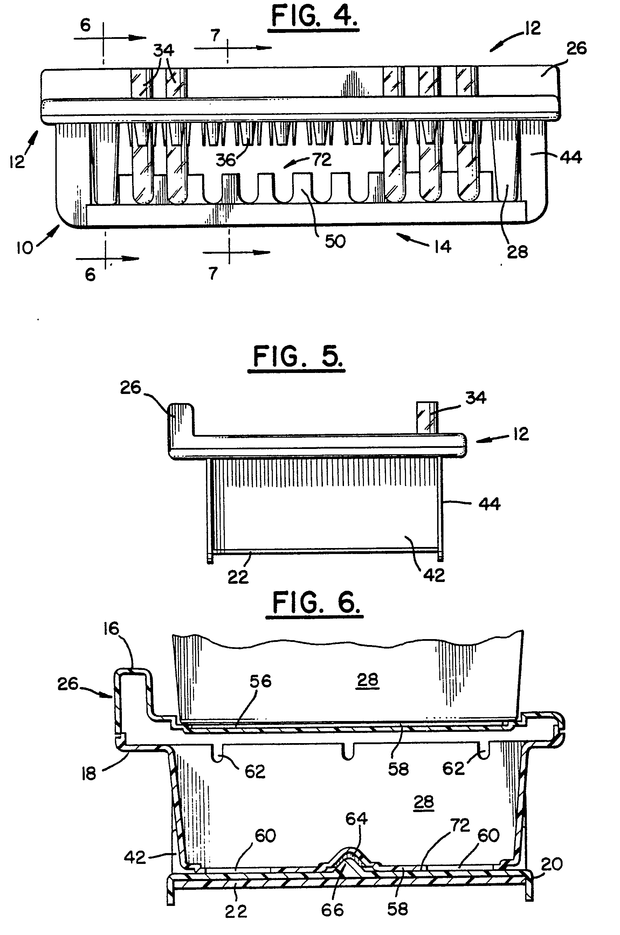

Rack 12 is most conveniently composed of upper portion 16 and lower portion 18 (see Figures 6 and 9), which portions can be combined by various standard techniques, such as, with screws and/or by gluing. At the rear portion of top 24, the rack includes upwardly directed shoulder 26. This shoulder gives the rack a front-back orientation so that in use confusion does not arise with regard to which row of containers 34 is the front row and which row is the back row. Also, as described below, shoulder 26 serves to stabilize rack 12 when the rack is inverted during the decanting step of an immunoassay.

To retain containers 34 in rack 12, each aperture 32 in top 24 has associated therewith one or more finger members 36 for engaging the sides of the containers. These finger members gently but firmly hold containers 34 in rack 12 so that the rack can be moved about by the user without any relative slippage between the containers and the rack. To help stabilize containers 34 in the rack, the finger members can include outwardly-extending protuberances 74 at their upper ends (see Figure 8). In its most preferred embodiment, finger members 36 are molded as an integral part of top 24. In this way, dirt, spilled reagents and the like do not collect around apertures 32, as has been the case with prior art systems employing add-on plastic inserts, rather than integral fingers.

Associated with opposite left and right hand ends of top 24 are downwardly directed legs 28. The distance from the bottoms 58 of legs 28 to the top of shoulder 26 is approximately equal to the heights of containers 34. As will now be described, this makes the rack self-supporting when inverted, even with only the frontmost row of apertures filled with containers.

Typically, apertures 32 are filled one row at a time, beginning with the frontmost row. In some cases all the rows are filled; in other cases, only a few rows at the front of the rack are filled. Containers 34 are inserted into apertures 32 with rack 12 sitting on, for example, a table top. The containers are pushed downwardly against the restraining force of finger members 36 until the bottoms of the containers contact the surface of the table top. Because the distance from the bottoms 58 of legs 28 to the top of shoulder 26 is essentially equal to the height of containers 34, this puts the tops of containers 34 in essentially the same plane as the top of shoulder 26. Accordingly, when separator 10 is inverted, e.g., during decanting, it will support itself through contact of the top of shoulder 26 and the tops of containers 34 with, for example, a table top.

Rack 12 also includes handle members 30 at opposite ends of top 24. As described below, these handle members mate with handle members 38 of base 14 to form a combined handle 68 for separator 10, which combined handle, when employed by the user, automatically results in rack 12 and base 14 being moved as a unit.

As shown in Figure 8, legs 28 are conveniently made hollow, rather than solid. This makes rack 12 lighter and consumes less material, while still providing broad bottoms 58 for legs 28 so that rack 12 will set stably on a table top or the like. As mentioned above, in certain immunoassay procedures, it is necessary to boil the contents of containers 34 while the containers are being held in rack 12. To insure that rack 12 will not float when placed in a bath of boiling water, even if only the frontmost rows of apertures 32 have been filled with containers 34, legs 28 include apertures 60 associated with their bottoms 58 and vents 62 associated with their tops for the ingress and egress of water to and from the interior of the leg. By means of these apertures and vents, hollow legs 28 rapidly fill up with water and thus stabilize rack 12 when the rack is placed in a water bath, and rapidly empty themselves of water when the rack is taken out of a water bath.

In some cases, it is desirable to be able to stack a number of racks 12 on top of each other. To this end, rack 12 includes two recesses 56 at opposite ends of top 24 for receiving the bottoms 58 of legs 28. As shown in Figure 6, recesses 56 are sized and configured to readily accept and hold the bottoms of legs 28.

In addition to apertures 60, bottoms 58 of legs 28 also include recesses 64. These recesses are designed to mate with projections 66 formed in bottom 72 of base 14. The projections and recesses serve to guide rack 12 into the proper front-back alignment with respect to base 14 as the rack and the base are mated. As shown in Figures 6 and 9, recesses 64 have tapered sides to aid in this guiding and alignment process.

Turning now to base 14, the base is most conveniently composed of frame portion 20 and magnet cover 22 (see Figures 7 and 8). The frame portion and the magnet cover can be combined by various standard techniques, such as, by screws or other mechanical fasteners. Preferably, a sealant or gasket (not shown) is used at the junction of frame portion 20 with magnetic cover 22 to prevent reagents or other fluids from entering the interior of base 14 and corroding magnets 46.

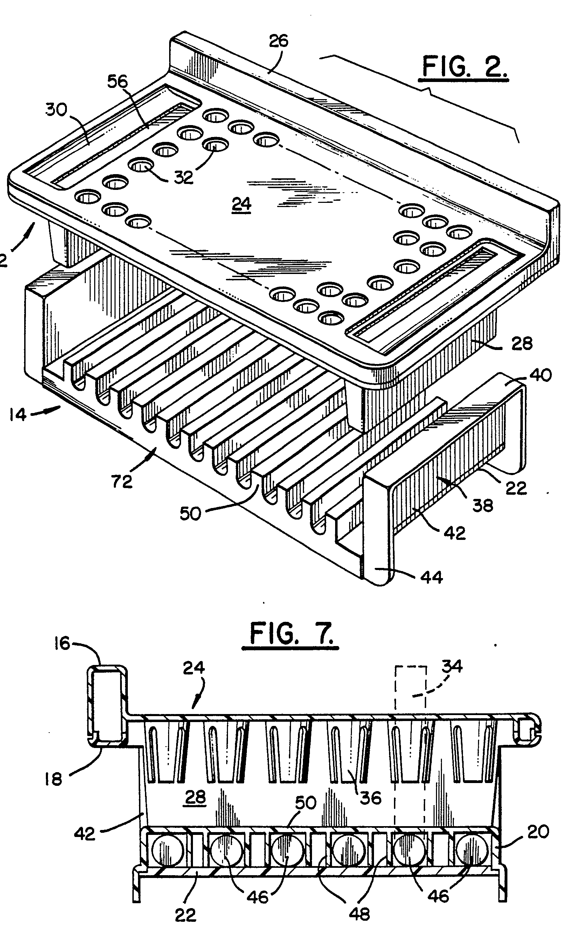

Base 14 includes two handle members 38 at opposite ends of bottom 72. Each handle member includes a horizontal portion 40, which is grasped by the user, a vertical portion 42 and two side portions 44 (see Figure 2).

As shown most clearly in Figure 8, handle members 38 are designed to mate with handle members 30 on rack 12 to form combined handles 68 for the entire separator 10. Horizontal portion 40 of handle member 38 closely engages the lower portion of handle member 30 so that when the user grasps combined handle 68, he perceives only a single handle and is not aware that there are actually two mechanically separate handles. By means of this combined handle, the mating of rack 12 with base 14 can be done by moving rack 12 in a generally vertical direction, i.e., by simply setting the rack down onto the base, and yet the complete separator automatically moves as a unit when the combined handle is grasped by the user.

Bottom 72 of base 14 has associated therewith an array of disc magnets 46. The magnets are arranged in lines or rows extending from the left-hand side to the right-hand side of base 14. These rows correspond to the rows of apertures 32 in top 24 of rack 12. The number of magnets in each row is equal to the number of apertures in a row plus one. All the magnets in a row are aligned with their north poles pointing in the same direction (see Figure 8). In this way, the mating of rack 12 with base 14 brings a first portion 52 of each container 34 into the proximity of a north pole of a magnet 46 and a second portion 54 of each container into the proximity of a south pole of a magnet 46.

As shown in Figures 7 and 8, the magnets are held in upstanding rib members 50 which extend from the front to the back of the bottom 72 of base 14. These rib members include spacers 48 for holding magnets 46 in their respective rows (see Figure 7). In order to increase the strength of the magnetic fields within containers 34, rib members 50 have a reduced wall thickness in the regions 70 which are in closest proximity to containers 34 when rack 12 and base 14 are mated (see Figure 8).

The arrangement of magnets 46 in base 14 is designed to minimize stray magnetic fields both below and throughout the space surrounding separator 10. To minimize stray fields in the space below the separator, as well as to conveniently bring north and south poles of magnets into the proximity of the sides of container 34, magnets 46 are arranged with their axes parallel to bottom 72 of base 14. This places the strongest magnetic fields produced by the magnets in a plane parallel to the bottom of base 14, where those fields produce the desirable result of separating magnetically responsive particles from a surrounding medium, rather than the undesirable result of accidently attaching the separator to metallic structures. With this arrangement of the magnets, it has been found that a magnetic shield is not required below the magnets, as was the case in the prior art commercial separator.

In addition to arranging magnets 46 with their axes parallel to the bottom of base 14, the magnets are also arranged so that the north poles of the magnets in adjacent rows point in opposite directions. For example, Figure 8 shows the orientation of the north poles for the magnets lying in an exemplary second row of magnets from the front of separator 10 (see section line in Figure 3). These magnets have their north poles pointing towards the left-hand side of the separator. In accordance with the preferred arrangement of the magnets, the magnets in the first and third rows will then have their north poles pointing towards the right-hand side of separator 10. In this way, the magnets at the ends of the rows do not all have the same orientation; that is, instead of being all north poles or all south poles, the magnets at the ends of the rows are alternately north pole, south pole, north pole, etc. This arrangement tends to cause the magnetic fields produced by the magnets at the ends of the rows to cancel each other out and thus reduce the net stray magnetic field produced in the space surrounding the right and left hand sides of separator 10. Since the disc magnets are arranged in rows with the north pole of one magnet facing the south pole of an adjacent magnet (except for the magnets at the end of rows; see above), the stray magnetic fields along the front and back of separator 10 are generally small and confined to the region immediately around the magnets, so that overall the separator generates a minimum of stray magnetic fields.

In accordance with certain preferred embodiments of the invention, rack 12 and base 14 are each molded out of a plastic material. For racks which are going to be subjected to boiling water for extended periods of time, the plastic material must be carefully chosen so that the molded parts will not deform or deteriorate during this treatment. Examples of the types of materials which can be used when boiling water treatment is contemplated include polyetherimides, polyethersulfones and polysulfones. Particularly preferred plastic materials for use with the present invention are polyetherimides. A polyetherimide sold the General Electric Company (Fairfield, Connecticut) under the trademark ULTEM (lot #1000—8102) has been found particularly suitable for use in constructing rack 12 and base 14.

If the separator is to be used only with immunoassays which do not require a boiling step, a variety of other plastic materials, including polypropylenes, impact-modified styrenes and medical grade ABS plastics, can be used. It should be noted that since base 14 is not normally subjected to boiling water treatment, it does not have to be composed of a plastic material which is resistent to boiling water, but rather a wider range of plastic materials can be used for this part of the separator.

Magnets 46 can be of various types and grades. A particularly preferred magnet for use with the present invention is the INCOR 18 rare earth cobalt magnet manufactured by Electronic Memories & Magnetics Corp., Valparaiso, Indiana.

Various magnetically responsive particles can be used with the magnetic separator of the present invention. Most preferably, the magnetically responsive particles should have an average diameter in the submicron range so as to achieve the advantages of small particles described above. A suitable technique for obtaining such particles is described in U.S. Patent Application Serial No. 493,991, filed on May 12, 1983, in the names of Mark S. Chagnon, Ernest V. Groman, Lee Josephson and Roy A. Whitehead, the pertinent portions of which are incorporated herein by reference. Using such magnetic particles and the INCOR 18 magnets described above separations in 12×75 mm test tubes from volumes greater than 1.5 milliliters, e.g., 1.7 milliliters, have been readily achieved using the separator of the present invention. Also, with particles of this type the progress of the separation is easily monitored by the user by observing the change in turbidity of the aqueous solution, as well as the accumulation of particles in the regions of the poles of the magnets.

Without intending to limit it in any manner, the present invention will be more fully described by the following example which compares the separation achieved by placing a container 34 between the north pole of one magnet and the south pole of another magnet, as occurs in separator 10, with the separation achieved by placing a magnet of the same strength beneath the bottom of container 34, as was done in the prior art.

Example

To demonstrate the superiority of the magnet arrangement of the present invention as compared to the magnet arrangement of the presently available commercial equipment, the separation times for the two arrangements were compared by means of parallel assays.

The assay used was a radioimmunoassay for thyroid stimulating hormone (TSH). The magnetic particles and the procedures employed were those described in sections 7.10.2 and 7.12 of the above-referenced co-pending U.S. Patent Application Serial No. 493,991, the pertinent portions of which are incorporated herein by reference. Specifically, 500 microliters of magnetic particles were combined with 100 microliters of $^{125}I$-rabbit anti-TSH antibody in phosphate buffered saline (Corning Medical and Scientific, No. 474185, Medfield, Mass.), and 100 microliters of a 60 µlU/ml TSH standard (Corning Medical and Scientific, No. 474186, Medfield, Mass.) in 12×75 mm test tubes. The mixture was incubated for 18 hours at room temperature, after which 500 microliters of water were added to each test tube to bring the total volume to 1.2 milliliters.

Separations on the mixtures were performed using the INCOR 18 magnets described above. In the prior art configuration, one INCOR 18 magnet was placed directly below the test tube. In the configuration of the present invention, the test tube was placed between the north pole of one INCOR 18 magnet and the south pole of a second INCOR 18 magnet.

Separations were conducted for periods of one, two, three and five minutes, after which the reagent solutions were decanted and the radioactivity of the particles collected in the vicinity of the magnets was measured.

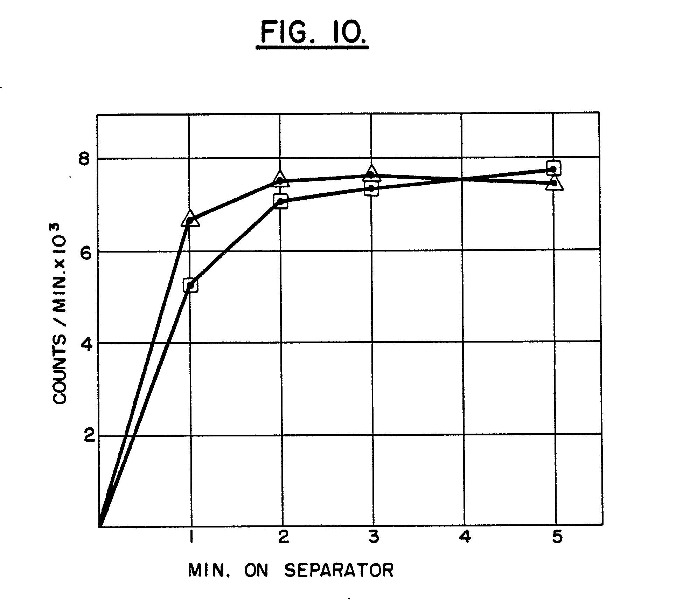

The results are shown in Figure 10, where the data points for the prior art arrangement are represented by squares and the data points for the arrangement of the present invention are represented by triangles. As clearly shown by these data, the configuration of the present invention separated the magnetic particles from the solution faster than the prior art configuration, i.e., the present invention achieved significantly higher counts per minute at earlier times. Also, because of this faster rate, the separation of the present invention was essentially complete at approximately two minutes, while the curve for the prior art separation still had a significant slope at this point in time.

For volumes greater than 1.2 milliliters, the difference between the separation times achieved with the present invention and the prior art is even greater than that shown in Figure 10. In general, the magnet arrangement of the present invention produces a distinct time advantage over the prior art arrangement for assay volumes greater than approximately 1.0 milliliter.

Although specific embodiments of the invention have been described and illustrated, it is to be understood that modifications can be made without departing from the scope of the invention. For example, the magnets need not be arranged with their poles aligned in transverse rows as illustrated herein, but can be arranged on the base portion of the separator in a variety of other configurations. Similarly, the handles on the rack and the base can take a variety of configurations other than those shown and described herein.

## Claims

1. Apparatus (10) for simultaneously performing magnetic separations in a plurality of containers (34), each container (34) containing, in use, an aqueous dispersion of particles which will respond to a magnetic field, comprising:
   a rack (12) for receiving and holding the containers (34) at predetermined locations, said rack (12) including a top (24) having an array of apertures (32) therein, each aperture (32) sized to receive one container (34); and
   a base (14) which mates with the rack (12), said base (14) including a bottom (72) having associated therewith an array of magnets (46), characterized in that the magnets (46) are arranged with their axes parallel to the bottom of the base (14) to minimize stray magnetic fields in the space below the apparatus (10), and the rack (12) and the base (14) mating with each other to bring a first portion of each container (34) into the proximity of a north pole of a magnet (46) and a second portion of each container (34) into the proximity of a south pole of a magnet (46).

2. An apparatus according to claim 1, wherein the magnets (46) are disc magnets.

3. An apparatus according to claim 1 or 2, wherein the magnets (46) are arranged in lines with the north poles of the magnets in each line pointing in a direction opposite to the direction of the north poles of the magnets in each adjacent line so as to minimize stray magnetic fields throughout the space surrounding the apparatus.

4. An apparatus according to any preceding claim, wherein the magnets (46) are contained in a plurality of upstanding rib members (56) associated with the bottom (72) of the base (14), the rib members (50) having a reduced wall thickness in those regions which are in proximity to the containers (46) when the rack (12) and the base (14) are mated so as to increase the strength of the magnetic fields within the containers (34).

5. An apparatus according to any preceding claim, comprising handle members (30) at opposite ends of the rack (12) and handle members at opposite ends of the base (14), the rack (12) and the base (14) mating with each other to bring the handle members (30) associated with the rack (12) and the handle members (38) associated with the base (14) into engagement with each other to form a combined handle (68), when employed by the user, automatically results in the rack (12) and the base (14) being moved as a unit.

6. An apparatus according to any preceding claim, wherein the volume of the aqueous dispersion is greater than approximately 1.5 ml and the average diameter of the particles which will respond to a magnetic field is in the submicron range.

7. An apparatus according to any preceding claim, wherein the rack (12) includes two downwardly directed legs (28) associated with opposite ends of the top (24) and an upwardly directed shoulder (26) associated with a rear portion of top (24), the distance from the bottom of the legs (28) to the top of the shoulder being approximately equal to the height of a container (34).

8. An apparatus according to any one of claims 1 to 6, wherein the rack (12) includes two downwardly directed, hollow legs (28) associated with opposite ends of the top (24), each leg (28) including an aperture (60) associated with its bottom and a vent (62) associated with its top for the ingress and egress of boiling water to and from the interior of the leg (28).

9. An apparatus according to any preceding claim, wherein each aperture (32) has associated therewith one or more finger members (38) for engaging the sides of the containers (34) to hold the containers in the rack (12), the one or more finger members (36) being an integral part of the top (24).

## Patentansprüche

1. Vorrichtung (10) zur gleichzeitigen Durchführung von Magnetscheidungen in einer Vielzahl von Behältern (34), wobei jeder Behälter (34) beim Gebrauch eine wäßrige Dispersion von Partikeln enthält, die auf ein Magnetfeld ansprechen, bestehend aus:

einem Rahmengestell (12) zum Aufnehmen und Halten der Behälter (34) an vorbestimmten Stellen, wobei das Rahmengestell (12) eine Oberseite (24) aufweist, in der sich eine Reihe von Öffnungen (32) befinden, wobei jede Öffnung (32) zur Aufnahme eines Behälters (34) dimensioniert ist; und

einem Grundteil (14), das zu dem Rahmengestell (12) paßt, wobei zu dem Grundteil (14) ein Boden (72) gehört, welchem eine Reihe von Magneten (46) zugeordnet sind,

dadurch gekennzeichnet, daß die Magneten (46) mit ihren Achsen parallel zu dem Boden des Grundteils (14) zur Minimierung von magnetischen Streufeldern in dem Raum unterhalb der Vorrichtung (10) angeordnet sind, und daß das Rahmengestell (12) und das Grundteil (14) derart zueinander passen, daß ein erster Abschnitt eines Behälters (34) in die Nähe eines Nordpols eines Magneten (46) und ein zweiter Abschnitt jedes Behälters (34) in die Nähe eines Südpols eines. Magneten (46) bringbar sind.

2. Vorrichtung nach Anspruch 1, dadurch gekennzeichnet, daß die Magnete (46) Scheibenmagnete sind.

3. Vorrichtung nach Anspruch 1 oder 2, dadurch gekennzeichnet, daß die Magnete (46) in Reihen angeordnet sind, wobei die Nordpole der Magnete in jeder Reihe in eine Richtung zeigen, die entgegengesetzt zu der Richtung der Nordpole der Magnete in jeder benachbarten Reihe liegt, um magnetische Streufelder über den gesamten Raum zu minimieren, der die Vorrichtung umgibt.

4. Vorrichtung nach einem vorangehenden Anspruch, dadurch gekennzeichnet, daß die Magnete (46) in einer Vielzahl von aufrechtstehenden Rippenelementen (56) enthalten sind, welche dem Boden (72) des Grundteils (14) zugeordnet sind, wobei die Rippenelemente eine verringerte Wanddicke in den Bereichen aufweisen, die in der Nähe der Behälter (34) liegen, wenn das Rahmengestell (12) und das Grundteil (14) zusammengesetzt sind, um die Stärke der magnetischen Felder innerhalb des Behälters (34) zu erhöhen.

5. Vorrichtung nach einem vorangehenden Anspruch, gekennzeichnet durch Handhabungselemente (30) an gegenüberliegenden Enden des Rahmengestells (12) und Handhabungselemente an gegenüberliegenden Enden des Grundteils (14), wobei das Rahmengestell (12) und das Grundteil (14) zueinander passen, um die Handhabungselemente (30), die dem Rahmengestell (12) zugeordnet sind, und die Handhabungselemente (38), die dem Grundteil (14) zugeordnet sind, in Eingriff miteinander zur Bildung einer vereinigten Handhabe (68) zu bringen, was bei der Benutzung durch eine Bedienungsperson automatisch dazu führt, daß das Rahmengestell (12) und das Grundteil (14) als eine Einheit bewegbar sind.

6. Vorrichtung nach einem vorangehenden Anspruch, dadurch gekennzeichnet, daß das Volumen der wäßrigen Dispersion größer als etwa 1,5 ml ist, und daß der Durchschnittsdurchmesser der Teilchen, die auf das magnetische Feld ansprechen, im Submikron-Bereich liegt.

7. Vorrichtung nach einem vorangehenden Anspruch, dadurch gekennzeichnet, daß das Rahmengestell (12) zwei nach unten gerichtete Beine (28), die gegenüberliegenden Enden des Oberteils (24) zugeordnet sind, und eine aufwärts gerichtete Schulter (26) aufweist, die einen rückseitigen Abschnitt der Oberseite (24) zugeordnet ist, wobei der Abstand von dem Boden der Beine (28) zu der Oberseite der Schulter annähernd gleich der Höhe eines Behälters (34) ist.

8. Vorrichtung nach einem der Ansprüche 1 bis 6, dadurch gekennzeichnet, daß das Rahmengestell (12) zwei nach unten gerichtete hohle Beine (28) aufweist, die gegenüberliegenden Enden der Oberseite (24) zugeordnet sind, wobei jedes Bein (28) eine seinem Boden zugeordnete Öffnung (60) und eine Entlüftung (62) aufweist, die seiner Oberseite für den Eintritt und den Austritt von kochendem Wasser in und aus dem Inneren des Beins (28) zugeordnet ist.

9. Vorrichtung nach einem vorangehenden Anspruch, dadurch gekennzeichnet, daß jeder Öffnung (32) eine oder mehrere Fingerelemente (36) für den Angriff an Seiten des Behälters (34) zum Halten des Behälters in dem Rahmengestell (12) zugeordnet sind, wobei der eine bzw. die mehreren Fingerelemente (36) einen einstückigen Abschnitt der Oberseite bilden.

## Revendications

1. Appareil (10) pour effectuer simultanément des séparations magnétiques dans plusieurs conteneurs (34) chaque conteneur (34) contenant, en service, une dispersion aqueuse de particules qui répond à un champ magnétique, comprenant:

un râtelier (12) pour recevoir et maintenir les conteneurs (34) en des positions prédéterminées, ledit râtelier (12) comprenant une partie supérieure (24) comportant un agencement d'ouvertures (32), chaque ouverture (32) étant dimensionnée pour recevoir un conteneur (34); et

une base (14) qui est adaptée au râtelier (12), ladite base (14) ayant un fond (72) auquel est associé un agencement d'aimants (46),

caractérisé en ce que les aimants (46) sont disposés avec leurs axes parallèles au fond de la base (14) afin de réduire les champs magnétiques de dispersion dans l'espace situé au-dessous de l'appareil (10), et le râtelier (12) et la base (14) s'adaptant l'un à l'autre pour placer une première partie de chaque conteneur (34) au voisinage d'un pôle nord d'un aimant (46) et une seconde partie de chaque conteneur (34) au voisinage d'un pôle sud d'un aimant (46).

2. Appareil suivant la revendication 1, dans lequel les aimants (46) sont des aimants en forme de disques.

3. Appareil suivant la revendication 1 ou 2, dans lequel les aimants (46) sont agencés en lignes avec les pôles nord des aimants dans chaque ligne dirigés dans une direction opposée à celle des pôles nord des aimants dans chaque ligne adjacente afin de réduire les champs magnétiques de dispersion dans tout l'espace entourant l'appareil.

4. Appareil suivant l'une quelconque des revendications précédentes, dans lequel les aimants (46) sont retenus par plusieurs nervures droites (50) associées au fond (72) de la base (14), les nervures (50) ayant une épaisseur de paroi réduite dans les régions qui sont voisines des conteneurs (46) lorsque le râtelier (12) et la base (14) sont assemblés afin d'augmenter la force des champs magnétiques à l'intérieur des conteneurs (34).

5. Appareil suivant l'une quelconque des revendications précédentes, comprenant des poignées (30) aux extrémités opposées du râtelier (12) et des poignées aux extrémités opposées de la base (14), le râtelier (12) et la base (14) s'adaptant l'un à l'autre pour amener les poignées (30) associées au râtelier (12) et les poignées (38) associées à la base (14) en prise l'une avec l'autre afin de former une poignée combinée (68) qui, lorsqu'elle est saisie par l'utilisateur, a automatiquement pour résultat que le râtelier (12) et la base (14) sont déplacés comme un ensemble.

6. Appareil suivant l'une quelconque des revendications précédentes, dans lequel le volume de la dispersion aqueuse est supérieur à environ 1,5 ml et le diamètre moyen des particules qui répondent à un champ magnétique est inférieur au micron.

7. Appareil suivant l'une quelconque des revendications précédentes, dans lequel le râtelier (12) comprend deux bossages (28) dirigés vers le bas, associés aux extrémités opposées de la partie supérieure (24) et un épaulement (26) dirigé vers le haut associé à une partie arrière de la partie supérieure (24), la distance de l'extrémité inférieure des bossages (28) à la partie supérieure de l'épaulement étant approximativement égale à la hauteur d'un conteneur (34).

8. Appareil suivant l'une quelconque des revendications 1 à 6, dans lequel le râtelir (12) comprend deux pieds (28) dirigés vers le bas associés aux extrémités opposées de la partie supérieure (24), chaque pied (28) comportant une ouverture (60) associée à sa partie inférieure et un orifice (62) de communication associé à sa partie supérieure pour l'entrée et la sortie d'eau bouillante vers l'intérieur et vers l'extérieur du bossage (28).

9. Appareil suivant l'une quelconque des revendications précédentes, dans lequel chaque ouverture (32) comporte un ou plusieurs doigts (36) pour venir en contact avec les côtés des conteneurs (34) pour maintenir les conteneurs dans le râtelier (12), le ou les doigts (36) étant venus de matière avec la partie supérieure (24).

## FIG. I.

## FIG. 3.

1

FIG. 2.

FIG. 7.

## FIG. 4.

## FIG. 5.

## FIG. 6.

## FIG. 8.

## FIG. 9.

# FIG. 10.